# EUROPEAN PATENT APPLICATION

(11) **EP 4 712 368 A1**
(43) Date of publication of application: **18.03.2026**
(21) Application number: 23948990.9
(22) Date of filing: 13.10.2023
(51) Int. Cl.: H04B 10/548, H04B 10/50, H04B 10/075

(54) **OPTICAL MODULE WITH OVERHEAD-MODULATION FUNCTION, AND DATA TRANSMISSION SYSTEM**

(30) Priority: 17.08.2023 CN 202311044577
(71) Applicant: Zhongtian Communication Technology Co., Ltd, Nantong, Jiangsu 226000 (CN); Zhongtian Broadband Technology Co., Ltd., Nantong, Jiangsu 226000 (CN); Jiangsu Zhongtian Technology Co., Ltd., Nantong, Jiangsu 226000 (CN)
(72) Inventor: YU, Wenzhi, Nantong, Jiangsu 226000 (CN); SHAO, Yujie, Nantong, Jiangsu 226000 (CN); ZHENG, Qifei, Nantong, Jiangsu 226000 (CN); SHEN, Yichun, Nantong, Jiangsu 226000 (CN); FU, Xiaodong, Nantong, Jiangsu 226000 (CN); LAN, Yanrui, Nantong, Jiangsu 226000 (CN)
(74) Representative: Lanchava, Bakuri
(86) International application number: PCT/CN2023/124473
(87) International publication number: WO 2025/035568

(57) **Abstract**

An optical module with an overhead-modulation function, and a data transmission system. The optical module comprises: a processing unit (10), an emitting unit (20), and a receiving unit (30), wherein the processing unit (10) is used for generating a first overhead-modulation signal; the emitting unit (20) is used for sending the first overhead-modulation signal and a first primary service signal to the next optical module; and the receiving unit (30) is used for receiving from the previous optical module a second primary service signal and a second overhead-modulation signal generated by the previous optical module. The emitting unit (20) comprises a loading circuit (21), and the receiving unit (30) comprises a sampling amplification circuit (31). An output end of the processing unit (10) is connected to an input end of the loading circuit (21), and an input end of the processing unit (10) is connected to an output end of the sampling amplification circuit (31); the loading circuit (21) is used for loading the first overhead-modulation signal into the primary service signal, so that the first overhead-modulation signal is transmitted along with the first primary service signal; and the sampling amplification circuit (31) is used for extracting the second overhead-modulation signal, filtering and amplifying the second overhead-modulation signal and then transmitting same to the processing unit (10). Thus, the present application facilitates the supervision over a remote module.

## Description

The present application claims priority to the Chinese patent application No. 202311044577.8 filed with the China National Intellectual Property Administration on August 17, 2023 and titled "OPTICAL MODULE WITH OVERHEAD-MODULATION FUNCTION, AND DATA TRANSMISSION SYSTEM", the entire contents of which are incorporated by reference in the present application.

### Technical field

The examples of the present application relate to the communications technical field, in particular to an optical module with Pilot Tone modulation function and a data transmission system.

### Background Art

With the continuous advancement of 5G construction and the increasing number of 5G application scenarios, in order to cope with the challenges of network deployment, operation and maintenance in 5G networks, and considering that the optical modules of devices in 4G base station cannot meet the corresponding transmission-reception requirements of 5G, various operators continue to explore technology research related to new 5G Fronthaul, Middlehaul, and Backhaul optical modules, to meet the needs of 5G network deployment and cost reduction.

At present, with the increasing deployment of middle-backhaul networks, the supervision problem of remote modules has gradually become prominent. In the prior art, a monitoring unit is usually configured on the remote module, and the monitoring unit is used to monitor the status of the remote module and transmit information.

However, the configuration of the monitoring unit on the remote module is inconvenient for maintenance and management, and the power consumption of the remote module is increased, and the cost is also increased accordingly.

### Summary of the Invention

The present application provides an optical module with a Pilot Tone modulation function and a data transmission system, to solve the inconvenient supervision problem of remote module.

In a first aspect, the present application provides an optical module with a Pilot Tone modulation function, including: a processing unit, a transmitting unit and a receiving unit;
The processing unit is configured to generate a first Pilot Tone modulation signal, the transmitting unit is configured to transmit the first Pilot Tone modulation signal and a first main service signal to the next optical module, and the receiving unit is configured to receive a second main service signal and a second Pilot Tone modulation signal generated by the previous optical module from the previous optical module;
The transmitting unit includes a loading circuit, and the receiving unit includes a sampling and amplifying circuit;
The output end of the processing unit is connected to the input end of the loading circuit, and the input end of the processing unit is connected to the output end of the sampling and amplifying circuit;
The loading circuit is configured to load the first Pilot Tone modulation signal into the main service signal, so that the first Pilot Tone modulation signal is transmitted along with the first main service signal;
The sampling and amplifying circuit is configured to extract the second Pilot Tone modulation signal, filter and amplify the second Pilot Tone modulation signal to obtain a third Pilot Tone modulation signal, and transmit the third Pilot Tone modulation signal to the processing unit.

Optionally, the transmitting unit further includes: a laser driver chip and a laser array;
The output end of the laser driver chip is connected to the input end of the laser array, and the output end of the loading circuit is connected to the input end of the laser array;
The laser driver chip is configured to transmit the first main service signal and drive the laser array;
The laser array is configured to convert the first main service signal and the first Pilot Tone modulation signal from electrical signal to optical signal.

Optionally, the laser driver chip uses a plurality of data transmission channels to transmit the main service signal;
The loading circuit is configured to load the first Pilot Tone modulation signal into the main service signal, including:
The loading circuit is configured to load the first Pilot Tone modulation signal into the main service signal transmitted by one of the plurality of data transmission channels.
Optionally, the transmitting unit further includes a wavelength division multiplexer, and the receiving unit further includes a wavelength decomposition multiplexer;
The input end of the wavelength division multiplexer is connected to the output end of the laser array, and the output end of the wavelength division multiplexer is connected to an optical fiber interface;
The input end of the wavelength decomposition multiplexer is connected to the optical fiber interface;
The wavelength division multiplexer is configured to convert a plurality of main service signals in the plurality of data transmission channels into one main service signal;
The wavelength decomposition multiplexer is configured to decompose one main service signal into a plurality of main service signals, so that the plurality of main service signals are transmitted through the plurality of data transmission channels, and one of the plurality of main service signals contains a second Pilot Tone modulation signal.

Optionally, the amplitude of the first Pilot Tone modulation signal or the second Pilot Tone modulation signal is 3-5% of the main service signal.

Optionally, the frequency of the first Pilot Tone modulation signal or the second Pilot Tone modulation signal is 1KHz-1 MHz.

Optionally, the processing unit includes: a signal generation module and an encoding module;
The output end of the signal generation module is connected to the input end of the encoding module, and the output end of the encoding module is connected to the input end of the loading circuit;
The signal generation module is configured to generate a first Pilot Tone modulation signal;
The encoding module is configured to encode the first Pilot Tone modulation signal.

Optionally, the processing unit further includes: a signal recovery module and a decoding module;
The input end of the signal recovery module is connected to the output end of the sampling and amplifying circuit, and the output end of the signal recovery module is connected to the input end of the decoding module;
The signal recovery module is configured to recover and regenerate the third Pilot Tone modulation signal to obtain a fourth Pilot Tone modulation signal;
The decoding module is configured to decode the fourth Pilot Tone modulation signal to obtain the second Pilot Tone modulation signal.

Optionally, the processing unit further includes: a data processing module;
The input end of the data processing module is connected to the output end of the decoding module, and the output end of the data processing module is connected to the input end of the encoding module.

In a second aspect, the present application provides a data transmission system, comprising at least two optical modules with Pilot Tone modulation function according to the first aspect and any example of the first aspect.

By providing a loading circuit and a sampling and amplifying circuit for the optical module, the optical module with Pilot Tone modulation function and the data transmission system provided in the present application enable synchronous transmission of the Pilot Tone modulation signal generated by the optical module and the main service signal without affecting the main service signal, thereby achieving the effect of supervising the remote module without providing a monitoring unit.

### Description of Drawings

In order to more clearly illustrate the technical solutions in the present application or the prior art, drawings required for use in the description of examples or the prior art will be briefly introduced below. Obviously, the drawings described below show some examples of the present application. For those of ordinary skills in the art, other drawings can also be obtained based on these drawings without expending any creative work.
FIG. 1 is a schematic diagram of an application scenario of an optical module provided in an example of the present application;
FIG. 2 is a schematic structure diagram of an optical module provided in an example of the present application;
FIG. 3 is a schematic structure diagram of another optical module provided in an example of the present application;
FIG. 4 is a schematic structure diagram of another optical module provided in an example of the present application;
FIG. 5 is a schematic diagram of a Pilot Tone modulation signal provided in an example of the present application.

### Reference numerals:

10 - processing unit; 11 - signal generation module; 12 - encoding module; 13 - signal recovery module; 14 - decoding module; 15 - data processing module;
20 - transmitting unit; 21 - loading circuit; 22 - laser driver chip; 23 - laser array; 24 - wavelength division multiplexer;
30 - receiving unit; 31 - sampling and amplifying circuit; 32 - wavelength decomposition multiplexer; 33 - PIN array; 34 - TIA chip;
40 - optical fiber interface.

### Embodiments

In order to make the object, technical solution and advantages of the present application clearer, the technical solution of the present application will be clearly and fully described in conjunction with the drawings in the present application. Obviously, the described examples are a part of the examples of the present application, not all of them. All other examples obtained by those of ordinary skills in the art based on the examples in the present application without expending any creative work fall within the protection scope of the present application.

In the specification, claims, and the above drawings of the present application, the terms "first", "second", "third", "fourth", etc. are used to distinguish similar objects, and are not necessarily used to describe a specific order or sequence. It should be understood that the data used in this way can be interchangeable where appropriate. For example, without departing from the scope of the present application, the first information can also be referred to as the second information, and similarly, the second information can also be referred to as the first information.

Furthermore, as used herein, the singular forms "a", "an" and "the" are intended to include plural forms as well, unless indicated otherwise in the context.

It should be further understood that the terms "comprises" and "includes" indicate the existence of features, steps, operations, elements, components, items, types, and/or groups, but do not exclude the existence, occurrence, or addition of one or more other features, steps, operations, elements, components, items, types, and/or groups.

With the continuous advancement of 5G construction and the increasing number of application scenarios, in order to cope with the challenges of network deployment, operation and maintenance in 5G networks, and considering that the 6Gbps/10Gbps optical modules of devices in 4G base station cannot meet the corresponding transmission and reception requirements of 5G, various operators continue to explore technology research related to new 5G fronthaul and middle-backhaul optical module, to meet the needs of 5G network deployment and cost reduction.

The rate of 5G fronthaul optical modules is mainly concentrated in 25Gbps optical modules, and middlehaul and backhaul networks mainly use 50Gbps and 100Gbps optical modules. With the increase in data volume, 100Gbps optical modules are increasingly used in middlehaul and backhaul, and the supervision problem of 100Gbps remote modules is becoming more and more prominent. In the prior art, the corresponding functional units are usually configured on the remote module to support the control and monitoring of the remote module. For example, the 100G QSFP28 LR4 optical module has the advantages of low power consumption, high port density, and low cost, but does not support the transmission of supervision information. To achieve the control of the remote module, the corresponding control unit must be configured on the remote module.

The existing method for monitoring remote modules is not only costly, but also increases the power consumption of the device and is inconvenient for maintenance and management.

In view of the above problems, the present application provides an optical module with Pilot Tone modulation function and a data transmission system. The present application provides an external circuit based on the existing optical module, and through this external circuit, the Pilot Tone modulation signal generated by remote optical module is loaded to the main service signal in a low-frequency perturbation manner, so that the Pilot Tone modulation signal and the main service signal are synchronously transmitted to the local network management system, so as to realize the operation, management and maintenance of the remote optical module by the local network management system, thereby achieving the object of rapid location of network faults, improving network operation and maintenance efficiency, and saving operation and maintenance costs.

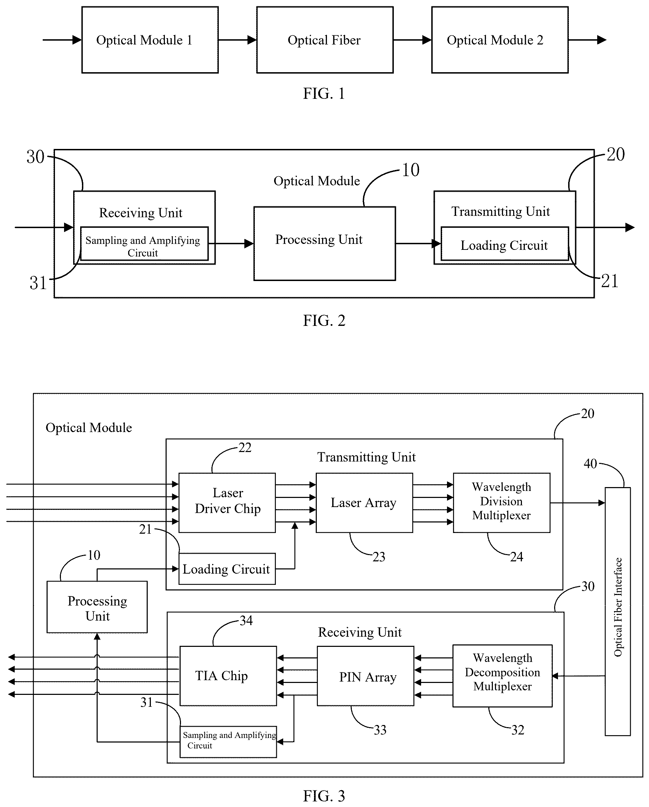

FIG. 1 shows a schematic diagram of an application scenario of an optical module provided by an example of the present application. As shown in FIG. 1, after the optical module 1 (remote module) receives the main service signal, it converts the main service signal from an electrical signal to an optical signal, and transmits the optical signal to the optical module 2 through an optical fiber. The optical module 2 converts the received optical signal into an electrical signal, and the local network management system can receive the electrical signal, that is, the main service signal.

The technical solution of the present application is described in detail with specific examples below. The following specific examples may be combined with each other, and the same or similar concepts or processes may not be described in detail in some examples.

FIG. 2 shows a schematic structure diagram of an optical module provided in an example of the present application. As shown in FIG. 2, the optical module of this example may include a processing unit 10, a transmitting unit 20 and a receiving unit 30.

Wherein, the processing unit 10 is configured to generate a first Pilot Tone modulation signal. The Pilot Tone modulation signal is network monitoring and management information generated by the optical module, for example, status parameters of the optical module, such as the optical power, power supply voltage etc.

The transmitting unit 20 is configured to transmit the first Pilot Tone modulation signal and the first main service signal to the next optical module.

In this example, the transmitting unit 20 includes a loading circuit 21, and the output end of the processing unit 10 is connected to the input end of the loading circuit 21.

The transmitting unit 20 can load the first Pilot Tone modulation signal into the first main service signal through the loading circuit 21, so that the first Pilot Tone modulation signal and the first main service signal can be synchronously transmitted to the next optical module. In this process, the transmitting unit 20 can be the transmitting unit 20 of the optical module 1 in FIG. 1.

In this example, the receiving unit 30 includes a sampling and amplifying circuit 31, and the input end of the processing unit 10 is connected to the output end of the sampling and amplifying circuit 31.

The receiving unit 30 can receive a second main service signal and a second Pilot Tone modulation signal generated by the previous optical module from the previous optical module through the sampling and amplifying circuit 31. The sampling and amplifying circuit 31 extracts the second Pilot Tone modulation signal, filters and amplifies the second Pilot Tone modulation signal to obtain a third Pilot Tone modulation signal, and transmits the third Pilot Tone modulation signal to the processing unit 10.

In this example, the transmitting unit 20 and the receiving unit 30 are described in the same optical module, so the first Pilot Tone modulation signal and the second Pilot Tone modulation signal are distinguished. The receiving unit 30 can be the receiving unit 30 of the optical module 2 in FIG. 1.

Optionally, the amplitude of the first or the second Pilot Tone modulation signal is 3-5% of the main service signal.

Optionally, the frequency of the first or the second Pilot Tone modulation signal is 1KHz-1MHz.

Due to the Pilot Tone modulation signal with small amplitude and low frequency, the transmitting unit 20 can load the Pilot Tone modulation signal into the main service signal in a low-frequency perturbation manner, which reduces the disturbance of the Pilot Tone modulation signal to the main service signal and enables normal transmission of the main service signal.

The optical module with the Pilot Tone modulation function provided in the present example provides a loading circuit 21 in the transmitting unit 20, so that the Pilot Tone modulation signal can be loaded into the main service signal in a low-frequency perturbation manner and transmitted synchronously with the main service signal. The receiving unit 30 is provided with a sampling and amplifying circuit, so that the optical module can receive the Pilot Tone modulation signal, filter and amplify it to achieve the transmission of the Pilot Tone modulation signal, thereby achieving the effect of supervising the remote module by the local network management system without providing a supervision unit for the remote module, and facilitating supervision and subsequent maintenance.

FIG. 3 is a schematic structure diagram of another optical module provided in an example of the present application. As shown in FIG. 3, the transmitting unit 20 may further include: a laser driver chip 22 and a laser array 23.

The output end of the laser driver chip 22 is connected to the input end of the laser array 23, and the output end of the loading circuit 21 is connected to the input end of the laser array 23.

The laser driver chip 22 is configured to transmit the first main service signal and drive the laser array 23.

The laser array 23 is configured to convert the first service signal and the first Pilot Tone modulation signal from electrical signals to optical signals.

The laser driver chip 22 processes the main service electrical signal and drives the laser array 23 to convert the main service electrical signal into an optical signal. The loading circuit 21 processes the Pilot Tone modulation electrical signal and loads it into the main service electrical signal, the Pilot Tone modulation electrical signal and the main service electrical signal are synchronously converted into optical signals through the laser array 23.

With continued reference to FIG. 3, the laser driver chip 22 can use a plurality of data transmission channels to transmit the main service signal.

The loading circuit 21 can load the first Pilot Tone modulation signal into a main service signal transmitted by one of the plurality of data transmission channels. The data transmission channel loaded with the first Pilot Tone modulation signal can be used as the information monitoring and management channel of the optical module.

For example, an optical module of 100Gbps may include four data transmission channels of 25Gbps, each of which has a specific wavelength and an independent receiving function. The four data transmission channels transmit the main service signal together. The loading circuit 21 loads the Pilot Tone modulation signal into the main service signal in one of the data transmission channels to be synchronously transmitted with the main service signal.

In this example, a modulation signal with small amplitude and low frequency is superimposed on the information monitoring and management channel of the optical module, and the sampling and amplifying circuit 31 of the receiving unit 30 amplifies this modulation signal of low frequency to realize the transmission of the Pilot Tone modulation signal, that is, the transmission of the monitoring and management information, without affecting the transmission of the main service signal. In addition, since the Pilot Tone modulation signal is attached to the main service signal, no additional optical fiber channel is required, saving optical fiber resources.

With continued reference to FIG. 3, the transmitting unit 20 further includes a wavelength division multiplexer 24, and the receiving unit 30 further includes a wavelength decomposition multiplexer.

The input end of the wavelength division multiplexer 24 is connected to the output end of the laser array 23, and the output end of the wavelength division multiplexer 24 is connected to the optical fiber interface 40, through which the first main service signal and the first Pilot Tone modulation signal are transmitted to the next optical module.

The input end of the wavelength decomposition multiplexer is connected to the optical fiber interface 40, and receives the second main service signal and the second Pilot Tone modulation signal, which are sent by the previous optical module through the optical fiber, through the optical fiber interface 40.

In this example, when the laser driver chip 22 uses a plurality of data transmission channels to transmit the first main service signal, the loading circuit 21 loads the first Pilot Tone modulation signal to the main service signal in one of the data transmission channels. At this time, the wavelength division multiplexer 24 can convert the plurality of main service signals in the plurality of data transmission channels into the first main service signal.

Similarly, when receiving the second main service signal, the wavelength decomposition multiplexer may decompose the second main service signal into a plurality of main service signals, and the plurality of main service signals are transmitted through a plurality of data transmission channels, wherein one of the plurality of main service signals contains the second Pilot Tone modulation signal.

With continued reference to FIG. 3, the receiving unit 30 may also include a P-type semiconductor-impurity-N-type semiconductor (positive-intrinsic-negative, PIN) photodiode array (abbreviated as PIN array) 33 and a Trans-Impedance Amplifier (TIA) chip 34.

The output end of the wavelength decomposition multiplexer is connected to the input end of the PIN array 33, the output end of the PIN array 33 is connected to the input end of the TIA chip 34, and the output end of the PIN array 33 is also connected to the input end of the sampling and amplifying circuit 31.

The PIN array 33 can convert parallel optical signals in the plurality of data transmission channels into parallel electrical signals. The sampling and amplifying circuit 31 can extract the second Pilot Tone modulation signal from the second main service signal, filter and amplify the second Pilot Tone modulation signal. The TIA chip 34 is configured to amplify the second main service signal.

The optical module with Pilot Tone modulation function provided in this example transmits the Pilot Tone modulation signal through the information monitoring and management channel, realizes the remote monitoring of the remote module by the local network management system, reduces the occupation of the service signal wavelength resources, and saves the operation and maintenance costs.

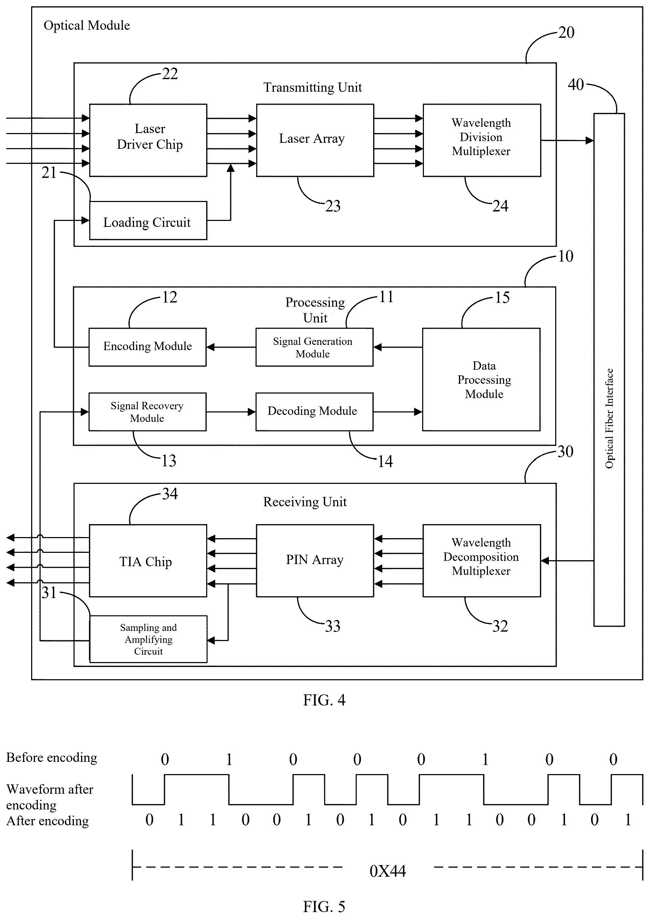

FIG. 4 is a structural schematic diagram of another optical module provided in an example of the present application. As shown in FIG. 4, the processing unit 10 may include: a signal generation module 11 and a coding module 12;
The output end of the signal generation module 11 is connected to the input end of the coding module 12, and the output end of the coding module 12 is connected to the input end of the loading circuit 21;
The signal generation module 11 is configured to generate a first Pilot Tone modulation signal;
The coding module 12 is configured to encode the first Pilot Tone modulation signal.

FIG. 5 is a schematic diagram of a Pilot Tone modulation signal provided in an example of the present application. As shown in FIG. 5, the encoded Pilot Tone modulation signal is a digital signal, which is converted into an analog square wave voltage signal with adjustable amplitude by the processing unit 10, and the loading circuit 21 converts the analog square wave voltage signal output by the processing unit 10 into an analog square wave current signal, and the analog square wave current signal is superimposed with the main service signal for transmission, and is converted into a Pilot Tone modulation optical signal through the laser array 23. The receiving unit 30 of the optical module receives the Pilot Tone modulation signal in the analog signal state, filters and amplifies it, and transmits it to the processing unit 10, which can convert it into a digital signal to realize the transmission of the Pilot Tone modulation signal.

With continued reference to FIG. 4, the processing unit 10 may further include: a signal recovery module 13 and a decoding module 14.

The input end of the signal recovery module 13 is connected to the output end of the sampling and amplifying circuit 31, and the output end of the signal recovery module 13 is connected to the input end of the decoding module 14.

The signal recovery module 13 is configured to recover and regenerate the third Pilot Tone modulation signal to obtain a fourth Pilot Tone modulation signal.

Wherein, the third Pilot Tone modulation signal is an analog signal, and the fourth Pilot Tone modulation signal is a digital signal. Recovery and regeneration refer to converting the Pilot Tone modulation signal from an analog signal to a digital signal.

The decoding module 14 is configured to decode the fourth Pilot Tone modulation signal to obtain a second Pilot Tone modulation signal.

As mentioned above, after the optical module generates a Pilot Tone modulation signal, the Pilot Tone modulation signal will be encoded and transmitted. The same is true here. The second Pilot Tone modulation signal generated by the previous optical module is then encoded and transmitted. After the current optical module receives the fourth Pilot Tone modulation signal, it will be decoded to obtain the second Pilot Tone modulation signal.

With continued reference to FIG. 4, the processing unit 10 may further include: a data processing module 15;
The input end of the data processing module 15 is connected to the output end of the decoding module 14, and the output end of the data processing module 15 is connected to the input end of the encoding module 12.

The data processing module 15 is configured to control the signal generation module 11 in the optical module to generate the Pilot Tone modulation signal, control the encoding module 12 to encode the Pilot Tone modulation signal, control the loading circuit 21 to load the Pilot Tone modulation signal into the main service signal for synchronous transmission with the main service signal, control the sampling and amplifying circuit 31 to extract the Pilot Tone modulation signal from the main service signal and filter and amplify it, control the signal recovery module 13 to recover and regenerate the Pilot Tone modulation signal, and control the decoding module 14 to decode the Pilot Tone modulation signal, and it is the control center of the optical module. In addition, the local network management system can also realize the control functions of the optical module, such as shutting down the optical power and resetting, through the data processing module 15.

The data processing module 15 can also store the second Pilot Tone modulation signal, which is obtained by decoding of the decoding module 14, in the device register in the local network management system, which is convenient for the local network management system to query.

The data processing module 15 can also collect information, such as the status parameters of the optical module before the signal generation module 11 generates the Pilot Tone modulation signal, so as to improve the efficiency of the optical module in generating the Pilot Tone modulation signal.

The optical module with the Pilot Tone modulation function provided in this example completes the generation of the Pilot Tone modulation signal and the recovery and regeneration after receiving the Pilot Tone modulation signal through the processing unit 10, and can realize the lightweight management and control of the remote optical module by the local network management system without configuring additional supervision device, which is conducive to the rapid location of network faults, has low cost and is convenient for operation and maintenance, improves the network operation and maintenance efficiency, and saves operation and maintenance costs.

The present application further provides a data transmission system, including at least two optical modules with the Pilot Tone modulation function as mentioned above.

As shown in FIG. 1 , when transmitting the main service signal, the optical module 1 loads the Pilot Tone modulation signal into the main service signal, so that the Pilot Tone modulation signal and the main service signal are transmitted synchronously. The optical module 1 converts the Pilot Tone modulation signal and the main service signal from electrical signals to optical signals, and transmits them to the optical module 2 via optical fiber. The optical module 2 converts the Pilot Tone modulation signal and the main service signal from optical signals to electrical signals, thereby realizing the monitoring and management of the remote optical module 1 by the local network management system. The data transmission system in this example includes at least optical module 1 and optical module 2.

The data transmission system provided in this example has similar implementation methods and technical effects as the aforementioned structural examples, which will not be repeated here.

According to the several examples provided in the present application, it should be understood that the disclosed structure can be implemented in other ways. For example, the examples described above are only schematic, for example, the division of modules is only a logical function division, and there may be other division methods in actual implementation, for example, multiple modules can be combined or integrated into another system, or some features can be ignored. Another point is that the mutual coupling or direct coupling or communication connection shown or discussed may be an indirect coupling or communication connection through some interfaces, devices or modules, which may be electrical, mechanical or other forms.

Wherein, each module may be physically separated, for example, installed in different locations of a device, or installed on different devices, or distributed on multiple network units, or distributed on multiple processors. All modules may also be integrated together, for example, installed in the same device, or integrated in a set of codes. Each module may exist in the form of hardware, or may also exist in the form of software, or may also be implemented in the form of software and hardware. The present application can select some or all of the modules according to actual needs to achieve the object of the present example.

Finally, it should be noted that the above examples are only used to illustrate the technical solutions of the present application, rather than to limit the present application. Although the present application has been described in detail with reference to the above examples, those of ordinary skills in the art should understand that they could still modify the technical solutions described in the above examples, or make equivalent replacements to some or all of the technical features therein. However, these modifications or replacements do not make the essence of the corresponding technical solutions depart from the scope of the technical solutions of the examples of the present application.

## Claims

1. An optical module with a Pilot Tone modification function, **characterized in that**, the optical module includes a processing unit, a transmitting unit and a receiving unit;
the processing unit is configured to generate a first Pilot Tone modification signal, the transmitting unit is configured to transmit the first Pilot Tone modification signal and a first main service signal to the next optical module, and the receiving unit is configured to receive a second main service signal and a second Pilot Tone modification signal generated by the previous optical module from the previous optical module;
the transmitting unit includes a loading circuit, and the receiving unit includes a sampling and amplifying circuit;
the output end of the processing unit is connected to the input end of the loading circuit, and the input end of the processing unit is connected to the output end of the sampling and amplifying circuit;
the loading circuit is configured to load the first Pilot Tone modification signal into the main service signal, so that the first Pilot Tone modification signal is transmitted along with the first main service signal;
the sampling and amplifying circuit is configured to extract the second Pilot Tone modification signal, filter and amplify the second Pilot Tone modification signal to obtain a third Pilot Tone modification signal, and transmit the third Pilot Tone modification signal to the processing unit.

2. The optical module with a Pilot Tone modification function according to claim 1, **characterized in that**, the transmitting unit further includes a laser driver chip and a laser array;
the output end of the laser driver chip is connected to the input end of the laser array, and the output end of the loading circuit is connected to the input end of the laser array;
the laser driver chip is configured to transmit the first main service signal and drive the laser array;
the laser array is configured to convert the first main service signal and the first Pilot Tone modification signal from electrical signals to optical signals.

3. The optical module with a Pilot Tone modification function according to claim 2, **characterized in that** the laser driver chip uses a plurality of data transmission channels to transmit the main service signal;
the loading circuit is configured to load the first Pilot Tone modification signal into the main service signal, including:
the loading circuit is configured to load the first Pilot Tone modification signal into the main service signal transmitted by one of the plurality of data transmission channels.

4. The optical module with a Pilot Tone modification function according to claim 3, **characterized in that**, the transmitting unit further includes a wavelength division multiplexer, and the receiving unit further includes a wavelength decomposition multiplexer;
the input end of the wavelength division multiplexer is connected to the output end of the laser array, and the output end of the wavelength division multiplexer is connected to an optical fiber interface;
the input end of the wavelength decomposition multiplexer is connected to the optical fiber interface;
the wavelength division multiplexer is configured to convert a plurality of main service signals in the plurality of data transmission channels into one main service signal;
the wavelength decomposition multiplexer is configured to decompose one main service signal into a plurality of main service signals, so that the plurality of main service signals are transmitted through the plurality of data transmission channels, and one of the plurality of main service signals contains a second Pilot Tone modification signal.

5. The optical module with a Pilot Tone modification function according to claim 3, **characterized in that** the amplitude of the first Pilot Tone modification signal or the second Pilot Tone modification signal is 3-5% of the main service signal.

6. The optical module with a Pilot Tone modification function according to claim 3, **characterized in that** the frequency of the first Pilot Tone modification signal or the second Pilot Tone modification signal is 1 KHz to 1 MHz.

7. The optical module with a Pilot Tone modification function according to any of claims 1-6, **characterized in that**, the processing unit includes a signal generation module and an encoding module;
the output end of the signal generation module is connected to the input end of the encoding module, and the output end of the encoding module is connected to the input end of the loading circuit;
the signal generation module is configured to generate a first Pilot Tone modification signal;
the encoding module is configured to encode the first Pilot Tone modification signal.

8. The optical module with a Pilot Tone modification function according to claim 7, **characterized in that**, the processing unit further includes a signal recovery module and a decoding module;
the input end of the signal recovery module is connected to the output end of the sampling and amplifying circuit, and the output end of the signal recovery module is connected to the input end of the decoding module;
the signal recovery module is configured to recover and regenerate the third Pilot Tone modification signal to obtain a fourth Pilot Tone modification signal;
the decoding module is configured to decode the fourth Pilot Tone modification signal to obtain the second Pilot Tone modification signal.

9. The optical module with a Pilot Tone modification function according to claim 8, **characterized in that**, the processing unit further includes a data processing module;
the input end of the data processing module is connected to the output end of the decoding module, and the output end of the data processing module is connected to the input end of the encoding module.

10. A data transmission system, **characterized in that**, the system comprises at least two optical modules with Pilot Tone modification function according to any of claims 1-9.
